# EUROPÄISCHE PATENTSCHRIFT

(11) **EP 0 471 940 B1**
(45) Veröffentlichungstag und Bekanntmachung des Hinweises auf die Patenterteilung: **07.12.1994**
(21) Anmeldenummer: 91110019.6
(22) Anmeldetag: 19.06.1991
(51) Int. Cl.: G01N 31/22

(54) **Kolorimetrische Nachweisvorrichtung mit einem Reagenzvorratsbehälter**
Colorimetric detecting device with a reagent storage reservoir
Dispositif de détection colorimétrique avec un réservoir de stockage d'un réactif

(30) Priorität: 16.08.1990 DE 4025842
(43) Veröffentlichungstag der Anmeldung: 26.02.1992
(73) Patentinhaber: Drägerwerk Aktiengesellschaft, 23542 Lübeck (DE)
(72) Erfinder: Rabenecker, Horst, W-2406 Klein Parin (DE); Rindt, Klaus-Peter, Dr., W-2400 Lübeck (DE); Scholtissek, Stephan, Dr., W-2400 Lübeck (DE); Breithaupt, Wolfgang, W-2361 Seedorf (DE); Trabert, Dieter, W-2400 Lübeck 1 (DE); Stock, Barbara, W-2400 Lübeck 1 (DE)

(56) Entgegenhaltungen:
- EP-A- 0 374 685
- DE-A- 3 914 801
- DE-B- 2 926 711
- DE-U- 7 929 899
- GB-A- 2 098 087
- US-A- 4 144 032

## Beschreibung

Die Erfindung betrifft eine kolorimetrische Nachweisvorrichtung für gasförmige oder flüssige Prüfmengen, die mit einem auf einen porösen, einen Farbindikator enthaltenden Träger aufgebrachten Reagenzlösung eine Verfärbungsreaktion eingehen, mit einem den Träger sichtbar machenden Gehäuse und einem Reagenzvorratsbehälter, dessen Inhalt zur Durchführung einer Messung derart mit dem Träger in Verbindung gebracht wird, daß eine Benetzung des Trägers mit der Reagenzlösung stattfindet.

Eine derartige Nachweisvorrichtung ist in Form eines Prüfröhrchens aus der DE-B-29 42 673 bekannt. Es dient zum Nachweis und zur Messung von Kupferaerosolen in Luft. In einem an ihren Spitzen abbrechbaren Glasröhrchen sind in Durchströmungsrichtung des Prüfröhrchens hintereinander angeordnet eine brechbare Glasampulle als Reagenzvorratsbehälter und eine Reaktionsschicht aus Silikagel als Träger, imprägniert mit einem Farbindikator für Kupfer. Zwischen der mit Salpetersäure gefüllten Ampulle und der Reaktionsschicht befindet sich eine Filterschicht, welche bei Durchsaugen des Prüfröhrchens die eventuell vorhandenen Kupferaerosole aus der Prüfmenge Luft zurückhält. Nach Abschluß der Probenahme wird die Ampulle zerbrochen, und es muß dafür Sorge getragen werden, daß sich der gesamte Ampulleninhalt gleichmäßig sowohl über die die Kupferaerosole enthaltende Filterschicht als auch über die Reagenzschicht mit dem Farbindikator ergießt. Da die Bruchstelle der Ampulle durch die Art ihres Einbaus in das Prüfröhrchen schon sofort nach Zerbrechen der Ampulle die Reagenzflüssigkeit freigibt, die sich umgehend auf die Filterschicht und Reaktionsschicht ergießt, bevor der übrige Rest aus der Ampulle entfernt ist, finden schon Farbreaktionen statt, bevor eine gleichmäßige Lösung der Kupferaerosole in der Salpetersäure und eine gleichmäßige Benetzung der Reaktionsschicht stattfinden. Dies hat zur Folge, daß an gewissen, mit dem Nachweisreagenz benetzten Stellen der Reaktionsschicht Verfärbungen auftreten, an anderen, noch nicht benetzten Stellen jedoch tritt die Verfärbung erst später ein. Die daraus resultierende ungleichmäßige Verfärbung der Reaktionsschicht erschwert ein sicheres Ablesen bzw. Vergleichen des Verfärbungsgrades mit einem Farbstandard. Um den gesamten Ampulleninhalt zur quantitativen Umsetzung mit der zu untersuchenden Prüfmenge und dem Farbreagenz zusammenzuführen, muß auf unreproduzierbare Weise, z.B. durch Schleuderbewegungen des mit der geöffneten Ampulle in der Hand gehaltenen Prüfröhrchens, der Ampulleninhalt ausgetrieben und auf die Reaktionsoberfläche gebracht werden. Somit hängt die Zuverlässigkeit des Meßverfahrens im wesentlichen von dem Geschick des Anwenders ab, die Nachweiseinrichtung in geeigneter Weise zu handhaben.

Desweiteren ist aus der EP-A-374 685 ein enzymatisches Nachweisgerät bekannt, bei dem ein poröser, mit einem Farbindikator versehener Träger in eine Reagenzlösung eintaucht und sich mit dieser vollsaugt, so daß an seiner Nachweisoberfläche eine Farbreaktion mit der zu untersuchenden gasförmigen Prüfmenge stattfindet.

In der US-A-4 144 032 wird ein Dosimeter beschrieben, bei dem eine vorgegebene Menge eines flüssigen Reagenz in einen Vorratsbehälter gegeben wird, von dem aus ein poröser Dochtkörper in die Umgebung führt. Der Docht saugt sich mit dem Reagenz voll, und nach einer vorgegebenen Expositionsdauer wird eine Nachweislösung hinzugegeben und der zu untersuchende Schadstoff über eine kolorimetrische chemische Reaktion nachgewiesen.

Der vorliegenden Erfindung liegt daher die Aufgabe zugrunde, eine kolorimetrische Nachweisvorrichtung der genannten Art so zu verbessern, daß nach dem Entleeren der Reagenzlösung aus dem Vorratsbehälter eine gleichmäßige Benetzung der dem Reagenz ausgesetzten Oberfläche des Trägers ermöglicht wird.

Die Lösung der Aufgabe erfolgt durch die Merkmale des Anspruchs 1.

Die Erfindung ist für kolorimetrische Nachweisvorrichtungen in Form von durchströmbaren Prüfröhrchen oder in Form einseitig geöffneter Sammelröhrchen (Dosimeter) einsetzbar, sie kann aber auch für plakettenförmige Indikatorträger verwendet werden, die alle zur Einleitung einer Farbreaktion mit einer Reagenzlösung getränkt werden müssen, mit welcher die nachzuweisende Prüfmenge zu einem die Farbreaktion ermöglichenden Reaktionsprodukt zwischen Prüfmenge und Reagenz umgewandelt wird. In diesem Zusammenhang und für die Bedeutung der Erfindung wird unter dem Begriff Reagenzlösung im einfachsten Falle Wasser als Lösungsmittel für die im Träger gebundenen Reaktionsbestandteile, und im komplexesten Falle eine organische oder wäßrige Lösung aller erforderlichen Reaktionsbestandteile angesehen.

Die kolorimetrische Nachweisvorrichtung mit den Merkmalen des Anspruchs 1 ist geeignet, in besonders vorteilhafter Weise die bei dem Prüfröhrchen-Nachweis bekannten Nachweisreaktionen ablaufen zu lassen. So kann beispielsweise zum Nachweis von Kupferaerosolen der Reagenzvorratsbehälter mit Salpetersäure gefüllt, und der Träger aus Silikagel mit einem Farbreagenz für Kupfer, z.B. Natriumdiäthyldithiocarbonat, imprägniert sein. Eine derartige Nachweiseinrichtung kann als Dosimeter verwendet werden, indem der imprägnierte Träger mit der Reagenzlösung getränkt und seine der Umgebung ausgesetzte Oberfläche den Zutritt des Kupferaerosols zu der Salpetersäure ermöglicht, worauf eine Farbreaktion mit dem Indikator auftritt, die vom Anwender von außen erkennbar ist.

Der Vorteil der Erfindung liegt im wesentlichen darin, daß sich nicht unmittelbar beim Aufbrechen des Reagenzvorratsbehälters ihr Inhalt über den Träger in unkontrollierbarer Weise ergießt, sondern daß er zunächst in einem Sammelraum aufgehalten wird und von dort aus gleichmäßigen und kontrollierbaren Zutritt zu dem Träger hat. Auf diese Weise ist sichergestellt, daß der Träger gleichmäßig an seiner der Reagenzlösung ausgesetzten Oberfläche benetzt wird, so daß im folgenden ein weiteres Fortschreiten der Reagenzlösung durch den porösen Farbindikatorträger sichergestellt ist. Somit ist für den Anwender eines Prüfröhrchens ein gleichmäßiges Fortschreiten der Verfärbungszone längs des Farbindikatorträgers erkennbar, oder bei Anwendung eines Dosimeters ist die Änderung der Farbintensität über den gesamten einsehbaren Trägerbereich gleichmäßig verteilt, so daß ein Vergleich mit einem Farbstandard zu gesicherten Ergebnissen führt. Zur Messung mit einem Prüfröhrchen wird dieses zunächst an seinen beiden Enden geöffnet, ohne jedoch den Reagenzvorratsbehälter zu zerstören, danach die Luftprobe mit der nachzuweisenden Prüfmenge über den Träger gezogen, an dem die Prüfmenge eine zunächst nicht sichtbare Reaktion mit mit einer auf dem Träger imprägnierten Reagenz eingeht, oder im einfachsten Fall auf der Trägeroberfläche adsorbiert wird. Nach Abschluß der Probenahme wird der Reagenzvorratsbehälter zerstört, die Reagenzlösaung ergießt sich in den Reagenzsammelraum und wird in dem porösen Träger transportiert. Während des Transports geht die auf der Trägeroberfläche befindliche Substanz eine Verfärbungsreaktion mit der Reagenzlösung ein. Das Fortschreiten der so gebildeten Verfärbungszone gibt ein Maß für die ursprünglich am Träger festgehaltenen Prüfmenge und kann bei Kenntnis der Prüfmenge bei einem kalibrierten Prüfröhrchen direkt als Konzentrationswert abgelesen werden. Dazu ist, wie in der Prüfröhrchenmeßtechnik üblich, eine Längenskale in ppm (parts per million) entlang dem sichtbaren Träger auf der Glaswand des Prüfröhrchens aufgetragen.

Die erfindungsgemäße Ausführungsform des Reagenzsammelraums besteht darin, ihn in Form eines siphonähnlichen Kanals auszubilden, dessen Volumen von dem Reagenz bis zur Benetzung der Stirnfläche des Trägers füllbar ist. Der Kanal ist an seinem Anfang von dem Reagenzvorratsbehälter begrenzt, und an seinem Ende von der der Reagenzlösung ausgesetzten Oberfläche des Trägers, die als Stirnfläche in den Sammelraum eintritt. Die Kanalführung ist so ausgestaltet, daß sie zwischen dem Reagenzvorratsbehälter einerseits und dem Träger andererseits bei geöffnetem Vorratsbehälter nach Art von kommunizierenden Röhren eine Flüssigkeitsverbindung herstellt derart, daß bei entleertem Vorratsbehälter der Flüssigkeitsspiegel im Reagenzsammelraum wegen des statischen Flüssigkeitsdrucks die der Reagenzlösung ausgesetze Oberfläche des Trägers völlig benetzt. Somit kann die Reagenzlösung unmittelbar nach dem Entleeren des Vorratsbehälters gleichmäßig von der in den Reagenzsammelraum eintretenden Oberfläche des Trägers ausgehend dank der Kapillarkräfte seines porösen Körpers in ihn hinein aufgesogen werden. Hat sich der Träger mit dem Reagenz vollgesogen, kann bei entsprechender Dimensionierung des Vorratsbehälters und des Kanalvolumens noch ein Rest der Reagenzflüssigkeit im Sammelraum verbleiben und dabei die Flüssigkeitsverbindung zu dem Träger aufrecht erhalten sein, so daß der Reagenzsammelraum einen Vorrat an Reagenzflüssigkeit aufbewahrt, wodurch ein Austrocknen des der Prüfmenge ausgesetzten Trägers über einen längeren Zeitraum hinweg vermieden wird.

Für eine gleichmäßige Benetzung der in den Sammelraum durchtretenden Oberfläche des Trägers ist es günstig, diesen nur wenig in den Sammelraum hineinragen zu lassen, im übrigen ihn aber im wesentlichen bündig mit der Wandung des Sammelraumes abschließen zu lassen.

Zur Verbesserung der Handhabungseigenschaften kann es günstig sein, den Reagenzsammelraum mit einer schwammartigen Füllung zu versehen. Die darin aufgesogene Flüssigkeit kann jetzt lageunabhängig der dem Reagenz auszusetzenden Oberfläche des Trägers zugeführt werden.

Zweckmäßigerweise ist ein Teil der Wandung des Reagenzsammelraums als ein durchstoßbarer Einlaß für den Durchtritt des Reagenz ausgebildet. Dieser durchstoßbare Einlaß kann in Form eines selbstdichtenden Septums vorliegen, durch welchen eine mit der Reagenzflüssigkeit gefüllte separate Spritze mit ihrer Kanüle gestochen werden kann, um die Reagenzflüssigkeit in den Reagenzsammelraum einzulassen, oder der Einlaß kann als zusätzliches selbstdichtendes Septum an dem Reagenzsammelraum angebracht sein, um neben der eigentlichen Reagenzflüssigkeit eine weitere, für den Ablauf der Farbreaktion erforderliche Reaktionskomponente in den schon gefüllten Reagenzsammelraum zusätzlich zu injizieren. Diese im Reagenzsammelraum erzeugte Mischung dient dann zur Aktivierung der im Träger aufgenommenen Reaktionsbestandteile und wird von diesem aufgenommen. Dies ist besonders vorteilhaft für solche Fälle, bei denen nicht lagerfähige Reaktionskomponenten unmittelbar vor dem Ablauf der Verfärbungsreaktion hinzugefügt werden müssen. In beiden Fällen dient dann die separate Spritze als Reagenzvorratsbehälter.

In weiterer vorteilhafter Ausgestaltung der Erfindung ist der Vorratsbehälter in einem Aufnahmebehälter untergebracht, in welchem der Vorratsbehälter auf einem dornartigen Ansatz ruht, der zu dessen Zerstörung in diesen eindrückbar ist. Somit ist der durchstoßbare Einlaß in der Wandung des Reagenzsammelraumes durch ein Wandteil des Vorratsbehälters gebildet. Der dornartige Ansatz befindet sich günstigerweise im Reagenzsammelraum, so daß bei Zerstörung des Vorratbehälters sich dessen Inhalt sofort in den Sammelraum ergießen kann. Bei Ausgestaltung des Vorratsbehälters als brechbare Glasampulle wird diese in die Aufnahmeöffnung des Aufnahmebehälters eingeschoben und erst zur Durchführung der Nachweisreaktion auf den Dorn gepreßt, so daß dieser den Boden der Ampulle durchdringt und ihn zerstört.

Eine ebenso günstige Ausführungsform besteht darin, den Vorratsbehälter für das Reagenz in einem von außen eindrückbaren Aufnahmebehälter aufzunehmen. Zur Zerstörung des Vorratsbehälters braucht dann lediglich ein elastisch oder eindrückbar ausgeführter Wandteil des Aufnahmebehälters gegen den an diesem Wandteil anliegenden Vorratsbehälter gepreßt zu werden, wodurch dieser zerstört wird. Dabei kann der Vorratsbehälter z.B. aus einer Glasampulle oder aus einem mit der Reagenzflüssigkeit gefüllten Kunststoffbeutel bestehen.

Benutzt man als Vorratsbehälter eine zerstörbare Ampulle, ist zur zuverlässigen Handhabung der Nachweisvorrichtung während des Zerstörungsvorganges eine Kappe über der Ampulle vorzusehen, die einen Tiefenanschlag besitzt, bis zu welchem die Ampulle in ihren Aufnahmebehälter zu ihrer Zerstörung eindrückbar ist. Die Kappe bildet gleichzeitig eine Abdichtung des Aufnahmebehälters gegenüber der Umgebung, so daß sie beim Eindrücken der Ampulle eine Pumpwirkung auf die aus der Ampulle austretenden Flüssigkeit ausübt, mit der der Ampulleninhalt in den Reagenzsammelraum gedrückt wird.

Zweckmäßigerweise wird die Kappe mit verschließbaren Belüftungsöffnungen versehen, die beim Eindrücken durch den Benutzer verschlossen sind, um die genannte Pumpwirkung zu erzielen, nach dem Eindrücken jedoch freigegeben werden, um ein völliges Entleeren der geöffneten Ampulle in den Sammelraum zu ermöglichen.

Beim Einsatz der kolorimetrischen Nachweisvorrichtung als Dosimeter ist ein Teil der Trägeroberfläche der nachzuweisenden Prüfmenge auszusetzen. Damit diese Oberfläche während der Bereitschaftszeit vor der Durchführung einer Messung durch Schadstoffe der Umgebungsatmosphäre nicht nachteilig verändert wird, ist es vorteilhaft, den Träger in dem Gehäuse an seiner die Verfärbung zeigenden, zur Prüfmenge hin auszusetzenden Oberfläche mit einer Schutzfolie abzudecken.

Um ein Entleeren des zerstörten Reagenzvorratsbehälters zu erleichtern, ist in dem den Vorratsbehälter aufnehmenden Gehäuseteil eine Belüftungsöffnung vorzusehen, welche ebenfalls mit einer Schutzfolie abgedeckt ist. Die Schutzfolie über dem Träger und der Belüftungsöffnung besteht zweckmäßigerweise aus einem Stück, so daß sie zur Vorbereitung einer Messung lediglich abgezogen zu werden braucht, um die Nachweisvorrichtung zur Durchführung einer Messung bereit zu haben.

Eine besonders vorteilhafte Ausführungsform der kolorimetrischen Nachweisvorrichtung ist darin zu sehen, daß der Träger auf einem dem Reagenzsammelraum zugekehrten Substanzbereich mit für die Verfärbungsreaktion notwendigen Reaktionsbestandteilen imprägniert ist, welche nach Benetzung mit der Reagenzlösung durch die Kapillarkräfte im Träger zu dem der Prüfmenge auszusetzenden Oberfläche des Trägers transportierbar sind, in dem sich eine mit den Reaktionsbestandteilen und der Reagenzlösung in Zusammenwirkung mit der Prüfmenge eine Verfärbungsreaktion eingehende Nachweissubstanz befindet. Mit dieser Anordnung erzielt man den bedeutenden Vorteil, daß der Träger in sich einerseits die für die Verfärbungsreaktion notwendigen Reaktionsbestandteile und eine mit der Prüfmenge eine Verfärbungsreaktion eingehende Nachweissubstanz jeweils getrennt an sich gegenüberliegenden Enden des Trägers gespeichert hat, ohne daß es zu einer Reaktion kommt, solange nicht die Reagenzlösung durch Transport innerhalb des porösen Trägers die Vereinigung sämtlicher für den Nachweis erforderlichen Reaktionsteilnehmer bewirkt. Durch die Trennung der Reaktionsteilnehmer wird gewährleistet, daß diese während einer mehr oder weniger länger andauernden Bereitschaftszeit nicht miteinander reagieren können, was eine nachfolgende Nachweismessung unwirksam machen würde, sondern daß sie jeder für sich chemisch stabil in dem Träger aufbewahrt werden und erst zur Durchführung einer Messung mit Hilfe der Transporteigenschaften der Reagenzlösung in dem Träger zusammengeführt werden, und zwar an dem Ort des Trägers, der auch der Prüfmenge auszusetzen ist, und der durch das Gehäuse einsehbar ist. Eine derartige räumliche Trennung von Reaktionsbestandteilen in dem porösen Träger ist besonders dann von Vorteil, wenn die Verfärbungsreaktion mit Hilfe eines an den Träger gebundenen Enzyms als Nachweissubstanz erfolgt und die Reaktionsbestandteile für das Enzym zu einer enzymatischen Reaktion mit der Prüfmenge erforderliche Substrate, das Enzym aktivierende Substanzen oder Chromogene sind. Die Reagenzflüssigkeit kann dann entweder eine Pufferlösung oder eine Chromogenlösung sein, jenachdem welche Reaktionsbestandteile in dem Träger bereits vorliegen. Enzymatische Reaktionen laufen nur dann ab, wenn das zugehörige Substrat mit dem Enzym in Reaktionsverbindung gebracht ist. Durch die Trennung von Enzym und Reaktionsbestandteilen (Substrat, Aktivator, Chromogene, als Beispiele) wird verhindert, daß die Reaktionspartner durch die vorhandene Umgebungsluftfeuchtigkeit schon während der Bereitschaftszeit der Nachweisvorrichtung unerwünscht miteinander reagieren würden. Zum enzymatischen Nachweis von beispielsweise Wasserstoffperoxid als Substrat für das Enzym Meerrettich-Peroxidase enthält die Reagenzflüssigkeit eine Lösung aus je ein mMol/L 4-Aminoantipyrin und N-Ethyl-N-Sulfopropyl-m-Toluidin in einem 50 mMol/L Phosphatpuffer. Der Phosphatpuffer soll einen pH-Wert von 7.3 gewährleisten. Mit einem derartigen Ansatz ist Wasserstoffperoxid selektiv über die Peroxidase (POD) als Biokatalysator durch eine Farbreaktion nachweisbar. Dabei bilden Aminoantipyrin und Ethyl-Sulfopropyltoluidin die Chromogene, welche aufgrund der Enzymreaktion zu einem Farbstoff kombinieren.

Ein weiteres Beispiel für die Anwendung eines Trägers mit räumlich getrennten Reaktionsbestandteilen ist ein Dosimeter für den Nachweis von Mercaptan: Der Träger enthält dazu als Nachweissubstanz in verdünnter Essigsäure gelöstes Cu(II)-Acetat, und ist im Substanzbereich mit Schwefel imprägniert. Der Reagenzvorratsbehälter ist mit m-Xylol gefüllt. Ist Mercaptan vorhanden, reagiert dieses mit dem Cu(II)-Acetat. Aus dem zerstörten Vorratsbehälter tritt das m-Xylol aus, löst den Schwefel und transportiert ihn zu dem Nachweisbereich, wo es in Verbindung mit dem Cu(II)-Acetat und dem Mercaptan zu einer verstärkten gelbbraunen Farbreaktion führt. Mercaptan bildet zwar schon mit Cu(II)-Acetat eine hellgelbe Mercaptid-Verbindung, jedoch wird diese durch den Hinzutransport des in Xylol gelösten Schwefels zu einer besser erkennbaren, gelbbraunen Kupferverbindung umgewandelt.

Ein Ausführungsbeispiel der Erfindung wird anhand einer schematischen Darstellung gezeigt und im folgenden näher erläutert.

Es zeigen
- Fig. 1: die Schnittdarstellung einer kolorimetrischen Nachweiseinrichtung mit Reagenzvorratsbehälter und Farbindikatorträger,
- Fig. 2: die Schnittdarstellung einer Ausführungsform mit eindrückbarem Vorratsbehälter,
- Fig. 3: die Schnittdarstellung einer Ausführungsform mit einem selbstdichtenden Septum am Vorratsbehälter.

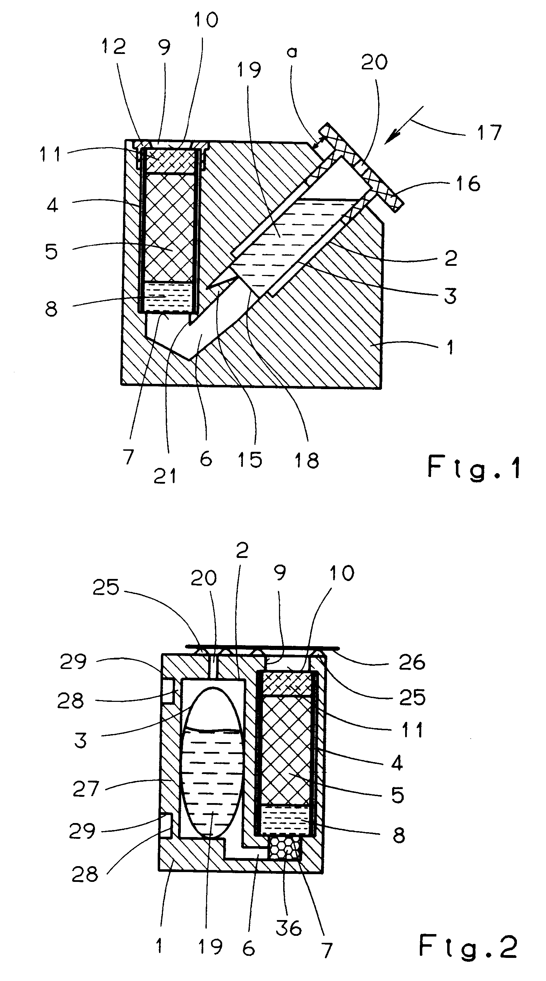

In Fig. 1 ist eine kolorimetrische Nachweiseinrichtung im Schnitt dargestellt, welche in einem Gehäuse 1 einen Aufnahmebehälter 2 für einen Reagenzvorratsbehälter 3, und einen Einsatz 4 für die Unterbringung eines porösen Trägers 5 besitzt. Der Träger 5 ist in dem Trägereinsatz 4 durch einen Klemmring 12 gehalten. Der Aufnahmebehälter 2 und der Trägereinsatz 4 sind miteinander durch einen siphonähnlichen Kanal als Reagenzsammelraum 6 verbunden. Der Träger 5 tritt in den Reagenzsammelraum 6 mit seiner dem Reagenz aussetzbaren Oberfläche als einer Stirnfläche 7 in den Reagenzsammelraum 6 ein. An diesem der Stirnfläche 7 sich anschließenden Substanzbereich 8 ist der Träger 5 mit für die Verfärbungsreaktion notwendigen Reaktionsbestandteilen, beispielsweise mit Chromogenen, zusätzlichen Substraten oder Aktivatoren, imprägniert. Die Imprägnierung kann durch Gefriertrocknung an den porösen Träger verwirklicht sein. Der Trägereinsatz 4 besitzt eine Nachweisöffnung 9, durch welche die nachzuweisende Prüfmenge Zutritt zur Nachweisoberfläche 10 des Trägers 5 hat, und über die eine im Zuge der Messung auftretende Verfärbung sichtbar ist. Der der Nachweisoberfläche 10 folgende Nachweisbereich 11 im Träger 5 enthält die für die Verfärbung notwendigen Nachweissubstanzen, die bei einem enzymatischen Nachweis z.B. die die Reaktion katalysierenden Enzyme sind. Die jeweiligen Reaktionsteilnehmer sind in der dargestellten Form im Träger 5 in dem jeweiligen Substanzbereich 8 und Nachweisbereich 11 voneinander räumlich getrennt. Der Reagenzvorratsbehälter 3 ruht in dem Aufnahmebehälter 2 auf einem dornartigen Ansatz 15 und ist in bezug auf das Gehäuse 1 mit einer Kappe 16 abgedeckt. Die Kappe 16 ist bis zu einem Tiefenanschlag a in Richtung des Pfeiles 17 eindrückbar. Wird die Kappe 16 bis zum Anschlag a eingedrückt, wird der Vorratsbehälter 3 mit seinem durchstoßbaren Einlaß 18 von dem Dorn 15 durchdrungen, so daß sich die Reagenzflüssigkeit aus dem Vorratsbehälter 3 durch den Einlaß 18 in den Reagenzsammelraum 6 ergießt. Während des Eindrückens der Kappe 16 wird eine in ihr vorgesehene Belüftungsöffnung 20 zugehalten, so daß während des Eindrückens in Richtung des Pfeiles 17 die Reagenzflüssigkeit 19 zwangsweise durch den durchstoßenen Einlaß 18 in den Sammelraum 6 gepreßt wird. Nach Freigeben der Belüftungsöffnung 20 kann sich der Rest der Reagenzflüssigkeit 19 aus dem Vorratsbehälter 3 in den Sammelraum 6 ergießen, so daß die Reagenzflüssigkeit 19 an der Durchtrittsöffnung 21 des Sammelraums 6 mit der Stirnfläche 7 des Trägers 5 in Kontakt gebracht ist. Durch die Kapillarkräfte des porösen Trägers 5 werden die gelösten Reaktionsbestandteile im Substanzbereich 8 durch den Träger 5 bis zum Nachweisbereich 11 transportiert, wo sich die Reaktionsbestandteile mit der Nachweissubstanz zusammen in gelöster Form vereinigen und somit geeignet sind, eine Prüfmenge als Substrat für das Enzym zu analysieren. Die Prüfmenge kann beispielsweise eine Luftprobe aus der Umgebung sein, die durch Diffusion an die Nachweisoberfläche 10 gelangt, oder sie kann eine Flüssigkeit sein, die beispielsweise durch Pipettieren auf die Nachweisoberfläche aufgetragen und anschließend auf dem Träger wieder eingetrocknet wird.

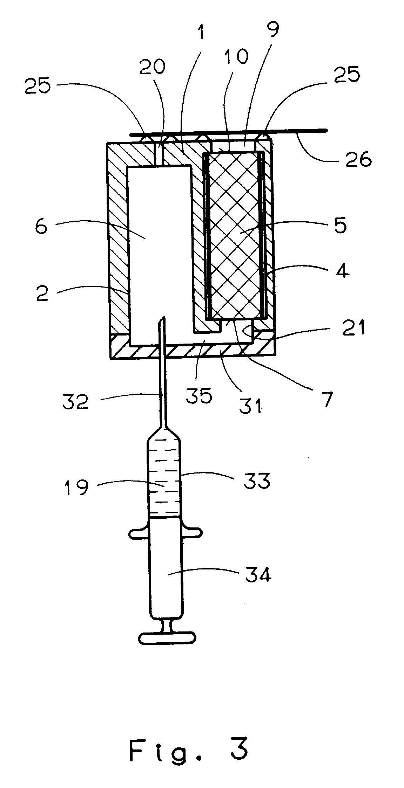

In Figur 2 ist das Gehäuse 1 im Schnitt dargestellt, welches sowohl den Träger 5 in dem Trägereinsatz 4 als auch den Reagenzvorratsbehälter 3 mit seiner Reagenzflüssigkeit 19 enthält. Der Aufnahmebehälter 2 für den Reagenzvorratsbehälter 3 ist mit einer Belüftungsöffnung 20 versehen, die durch eine auf einer selbstklebenden Ringdichtung 25 ruhenden Membran 26 abgeschlossen ist. Dieselbe Membran 26 schließt ebenfalls die Nachweisöffnung 9 und somit die Nachweisoberfläche 10 des Trägers 5 ab, indem sie auf einer die Nachweisöffnung 9 umgebenden selbstklebenden Ringdichtung 25 aufgelegt ist. Der Aufnahmebehälter 2 ist an seiner Wandung 27 eindrückbar, und zwar durch Schaffung von verdünnten Wandbereichen 28, die durch entsprechende Einkerbungen 29 in der Wandung 27 begrenzt sind. Durch Eindrücken der Wandung 27 wird der Reagenzvorratsbehälter 3 zerstört, so daß die Reagenzflüssigkeit 19 den kanalförmigen Reagenzsammelraum 6 bis hin zur Stirnfläche 7 des Trägers 5 füllt. Dabei ist ein Teil des Reagenzsammelraumes 6 mit einer die Stirnfläche 7 berührenden schwammartigen Füllung 36 versehen. Durch Kapillarkräfte im porösen Träger wird die Reagenzlösung 19 bis hin zur Nachweisoberfläche 10 an der der Prüfmenge ausgesetzten Nachweisöffnung 9 transportiert. Die Membran 26 ist für den Nachweis sowohl von der Nachweisöffnung 9 als auch von der Belüftungsöffnung 20 entfernt, so daß ein Nachtransport der Reagenzflüssigkeit je nach Verbrauch an der Nachweisoberfläche 10 ungehindert erfolgen kann. Der Reagenzvorratsbehälter 3 kann dabei entweder als eine Glasampulle ausgebildet sein, oder er besteht aus einem mit der Reagenzlösung 19 gefüllten Kunststoffbeutel.

Die in Fig. 3 dargestellte Ausführungsform ist besonders einfach gestaltet, da ihr Gehäuse 1 aus parallel zueinander ausgerichtetem Trägereinsatz 4 für den Träger 5 und Aufnahmebehälter 2 für die Reagenzlösung 19 ausgeführt sind. Der Aufnahmebehälter 2 schließt gleichzeitig den Reagenzsammelraum 6 ein, da die Reagenzlösung 19 von außerhalb des Gehäuses 1 zugeführt wird. Dazu ist der Reagenzsammelraum 6 mit einem selbstdichtenden Septum 31 versehen, durch das eine Kanüle 32 einer mit der Reagenzlösung 19 gefüllten Spritze 33 gestoßen ist. Die Spritze 33 übernimmt die Funktion als Reagenzvorratsbehälter. Durch Vorschieben des Kolbens 34 der Spritze 33 wird die Reagenzlösung 19 in den Reagenzsammelraum 6 entleert, aus welchem er unmittelbar durch einen Kanal 35 zu der Stirnfläche 7 überfließen kann und diese benetzt. Die Spritze 33 mit ihrer Kanüle 32 und dem Kolben 34 sind zur Veranschaulichung eines Reagenzvorratsbehälters dargestellt, mit dessen Hilfe das Septum 31 durchstoßbar ist.

## Patentansprüche

1. Kolorimetrische Nachweisvorrichtung für gasförmige oder flüssige Prüfmengen, die mit einer auf einen porösen, einen Farbindikator aufzunehmenden Träger (5) aufgebrachten Reagenzlösung (19) eine Verfärbungsreaktion eingehen, mit einem den Träger (5) sichtbar machenden Gehäuse (1) und einem Reagenzvorratsbehälter (3,33), dessen Inhalt zur Durchführung einer Messung derart mit dem Träger (5) in Verbindung gebracht wird, daß eine Benetzung des Trägers (5) mit der Reagenzlösung (19) stattfindet, dadurch gekennzeichnet, daß der Träger (5) und ein Aufnahmebehälter (2) für die Reagenzlösung aus dem Reagenzvorratsbehälter (3, 33) über einen keine Reagenzlösung (19) enthaltenden Reagenzsammelraum (6) in Strömungsverbindung gebracht sind, dessen Volumen einerseits von der Stirnfläche (7) des Trägers (5) in seinem Einsatz (4) und andererseits von dem Aufnahmebehälter (2) sowie dem Gehäuse (1) begrenzt ist, und dessen Form in Gestalt eines syphonähnlichen Kanals ausgebildet ist, und daß der Träger (5) in dem Einsatz (4) derart aufgenommen ist, daß seine Nachweisoberfläche (10) über eine Nachweisöffnung (9) Zutritt zu der zu untersuchenden Prüfmenge hat, und seine Stirnfläche (7) über eine Durchtrittsöffnung (21) mit dem Reagenzsammelraum (6) in Verbindung steht.

2. Kolorimetrische Nachweisvorrichtung nach Anspruch 1, dadurch gekennzeichnet, daß der Reagenzsammelraum (6) ein solches Volumen aufweist, daß er mit der Reagenzlösung (19) bis zur Benetzung der Stirnfläche (7) des Trägers (5) füllbar ist, welcher eine solche Porosität aufweist, daß bei benetzter Stirnfläche (7) die Reagenzlösung (19) über Kapillarkräfte in den Träger (5) aufsaugbar ist.

3. Kolorimetrische Nachweisvorrichtung nach Anspruch 1 oder 2, dadurch gekennzeichnet, daß ein Teil der Wandung des Reagenzsammelraums (6) ein durchstoßbarer Einlaß (18) für den Durchtritt der Reagenzlösung (19) bildet.

4. Kolorimetrische Nachweisvorrichtung nach Anspruch 3, dadurch gekennzeichnet, daß der Einlaß in Form eines selbstdichtenden Septums (31) ausgebildet ist.

5. Kolorimetrische Nachweisvorrichtung nach einem der Ansprüche 1 bis 4, dadurch gekennzeichnet, daß die Durchtrittsöffnung (21) für die Stirnfläche (7) des Trägers (5) im wesentlichen bündig mit der Wandung des Reagenzsammelraumes (6) abschließt.

6. Kolorimetrische Nachweisvorrichtung nach Anspruch 1 oder 2, dadurch gekennzeichnet, daß der Vorratsbehälter (3) in dem Aufnahmebehälter (2) untergebracht ist, in welchem der Vorratsbehälter (3) auf einem dornartigen Ansatz (15) ruht, der zur Zerstörung des Vorratsbehälters (3) in diesen eindrückbar ist.

7. Kolorimetrische Nachweisvorrichtung nach Anspruch 1, 2 oder 5, dadurch gekennzeichnet, daß der Aufnahmebehälter (2) von außen eindrückbar ist.

8. Kolorimetrische Nachweisvorrichtung nach Anspruch 1, 2, oder 5, dadurch gekennzeichnet, daß der Vorratsbehälter als eine im Aufnahmebehälter (2) aufgenommene zerstörbare Ampulle (3) ausgebildet ist.

9. Kolorimetrische Nachweisvorrichtung nach Anspruch 6, dadurch gekennzeichnet, daß die Ampulle (3) mit einer Kappe (16) versehen ist, die einen Tiefenanschlag (a) besitzt, bis zu welchem sie in den Aufnahmebehälter (2) zur Zerstörung der Ampulle (3) eindrückbar ist.

10. Kolorimetrische Nachweisvorrichtung nach Anspruch 9, dadurch gekennzeichnet, daß die Kappe (16) mit einer verschließbaren Belüftungsöffnung (20) versehen ist.

11. Kolorimetrische Nachweisvorrichtung nach einem der Ansprüche 1 bis 10, dadurch gekennzeichnet, daß der Träger (5) in dem Gehäuse (1) an seiner die Verfärbung zeigenden, zur Prüfmenge hin offen auszusetzenden Nachweisoberfläche (10) mit einer Schutzfolie (26) abgedeckt ist.

12. Kolorimetrische Nachweisvorrichtung nach einem der Ansprüche 8 bis 11, dadurch gekennzeichnet, daß sich die Schutzfolie (26) über eine Belüftungsöffnung (20) in dem den Vorratsbehälter (3) aufnehmenden Gehäuseteil erstreckt.

13. Kolorimetrische Nachweisvorichtung nach einem der Ansprüche 1 bis 12 dadurch gekennzeichnet, daß der Träger (5) in einem dem Reagenzsammelraum (6) zugekehrten, der Stirnfläche (7) sich anschließenden Substanzbereich (8) mit für die Verfärbungsreaktion notwendigen Reaktionsbestandteilen imprägniert ist, welche durch Benetzung mit der Reagenzlösung (19) durch die Kapillarkräfte im Träger (5) zu der der Prüfmenge auszusetzenden Nachweisoberfläche (10) des Trägers (5) in einen Nachweisbereich (11) transportierbar sind, in welchem sich eine mit den Reaktionsbestandteilen und der Reagenzlösung (19) in Zusammenwirkung mit der Prüfmenge eine Verfärbungsreaktion eingehende Nachweissubstanz befindet.

14. Kolorimetrische Nachweisvorrichtung nach Anspruch 13, dadurch gekennzeichnet, daß die Nachweissubstanz ein an den Träger (5) im Nachweisbereich (11) gebundenes Enzym ist, die Reaktionsbestandteile für die enzymatische Reaktion mit der Prüfmenge erforderliche Substanzen im Substanzbereich (8) aufgenommen sind, und daß die Reagenzlösung (19) ein die Farbreaktion auslösendes Chromogenreagenz in wäßriger Lösung ist.

15. Kolorimetrische Nachweisvorrichtung nach Anspruch 13, dadurch gekennzeichnet, daß die Nachweissubstanz ein an den Träger (5) im Nachweisbereich (11) gebunden vorliegendes Enzym, die Reaktionsbestandteile im Substanzbereich (8) eine Imprägnierung aus Kosubstraten und Chromogenen, und die Reagenzlösung (19) eine wäßrige Pufferlösung ist.

16. Kolorimetrische Nachweisvorrichtung nach einem der Ansprüche 1 bis 15, dadurch gekennzeichnet, daß der Reagenzsammelraum (6) mit einer schwammartigen Füllung (36) versehen ist.

## Claims

1. Colorimetric detecting device for gaseous or liquid test quantities, which enter into a colour change reaction with a reagent solution (19) applied to a porous support (5) for receiving a colour indicator, comprising a housing (1) which reveals the support (5) and a reagent reservoir (3, 33) the contents of which, for carrying out a measurement, are brought into contact with the support (5) in such a way that wetting of the support (5) by the reagent solution (19) occurs, characterised in that the support (5) and a receptacle (2) for the reagent solution from the reagent reservoir (3, 33) are brought into flowing contact through a reagent collecting chamber (6) containing no reagent solution (19), of which the volume is defined at one end by the end face (7) of the support (5) in its holder (4) and at the other end by the receptacle (2) and the housing (1), and of which the shape is in the form of a siphon-like passage, and that the support (5) is accommodated in the holder (4) in such a way that its detecting surface (10) has access to the test quantity to be investigated by way of a detection opening (9), and its end face (7) is in communication with the reagent collecting chamber (6) by way of a passage opening (21).

2. Colorimetric detecting device according to claim 1, characterised in that the volume of the reagent collecting chamber (6) is such that it can be filled with the reagent solution (19) until wetting of the end face (7) of the support (5) occurs, the porosity of the support being such that on wetting the end face (7) the reagent solution (19) can be soaked up into the support (5).

3. Colorimetric detecting device according to claim 1 or claim 2, characterised in that part of the wall of the reagent collecting chamber (6) forms a penetrable inlet (18) for the passage of the reagent solution (19).

4. Colorimetric detecting device according to claim 3, characterised in that the inlet is in the form of a self-sealing septum (31).

5. Colorimetric detecting device according to one of claims 1 to 4, characterised in that the passage opening (21) for the end face (7) of the support (5) ends substantially flush with the wall of the reagent collecting chamber (6).

6. Colorimetric detecting device according to claim 1 or claim 2, characterised in that the reservoir (3) is accommodated in the receptacle (2), wherein the reservoir (3) rests on a spike-like projection (15) which can be pressed into the reservoir (3) to destroy it.

7. Colorimetric detecting device according to claim 1 or claim 2, characterised in that the receptacle (2) can be pressed in from outside.

8. Colorimetric detecting device according to claim 1, claim 2 or claim 5, characterised in that the reservoir is in the form of a destructible ampoule (3) accommodated in the receptacle (2).

9. Colorimetric detecting device according to claim 6, characterised in that the ampoule (3) is provided with a cap (16) which has a depth stop (a) up to which it can be pressed into the receptacle (2) to destroy the ampoule (3).

10. Colorimetric detecting device according to claim 9, characterised in that the cap (16) is provided with a closable vent opening (20).

11. Colorimetric detecting device according to any one of claims 1 to 10, characterised in that the support (5) in the housing (1) is covered on its detecting surface (10), which shows the colour change and which is open and exposed to the test quantity, by a protective foil.

12. Colorimetric detecting device according to any one of claims 8 to 11, characterised in that the protective foil (26) extends over the vent opening (20) in the part of the housing which accommodates the reservoir (3).

13. Colorimetric detecting device according to any one of claims 1 to 12, characterised in that in a substance region (8) facing the reagent collecting chamber (6) and next to the end face (7) the support (5) is impregnated with reactants required for the colour change reaction, which by wetting with the reagent solution (19) can be transported by means of the capillary forces in the support (5) to the detecting surface (10) to be exposed to the test quantity in a detecting region (11), in which a detecting substance is present which enters into a colour change reaction with the reactants and the reagent solution (19) in cooperation with the test quantity.

14. Colorimetric detecting device according to claim 13, characterised in that the detecting substance is an enzyme bound to the support (5) in the detecting region (11), the reactants for forming the substances necessary for the enzymatic reaction with the test quantity are accommodated in the substance region (8), and that the reagent solution (19) is a chromogen reagent initiating the colour reaction, in aqueous solution.

15. Colorimetric detecting device according to claim 13, characterised in that the detection substance is an enzyme present bound on the support (5) in the detection region (11), the reactants in the substance region (8) are an impregnation of co-substances and chromogens, and the reagent solution (19) is an aqueous buffer solution.

16. Colorimetric detecting device according to any one of claims 1 to 15, characterised in that the reagent collecting chamber (6) is provided with a sponge-like filling (36).

## Revendications

1. Dispositif de détection colorimétrique de quantités gazeuses ou liquides en étude, qui avec une solution réactive (19), appliquée sur un support (5) poreux, absorbant un indicateur coloré, donnent une réaction de coloration, comportant un boîtier (1), laissant voir le support (5) et un réservoir de réactif (3, 33) dont le contenu est amené en communication avec le support (5), pour la mise en oeuvre d'une mesure, de manière que le support (5) soit mouillé avec la solution réactive (19), caractérisé en ce que le support (5) et un récipient de collecte (2) de la solution réactive provenant du réservoir de réactif (3, 33), sont amenés à communiquer par un compartiment de collecte de réactif (6) ne contenant pas de solution réactive (19) dont le volume est limité d'une part par la surface frontale (7) du support (5) dans son insert (4) et d'autre part par le récipient de collecte (2) ainsi que par le boîtier (1), et dont la forme est celle d'un canal semblable à un siphon, et en ce que le support (5) est logé dans l'insert (4) de manière que sa surface de détection (10) ait accès, par une ouverture de détection (9), à la quantité en étude, et sa surface frontale (7) communique, par une ouverture de passage (21), avec le compartiment de collecte de réactif (6).

2. Dispositif de détection colorimétrique selon la revendication 1, caractérisé en ce que le compartiment de collecte de réactif (6) présente un volume tel qu'il puisse être rempli avec la solution réactive (19) jusqu'à mouiller la surface frontale (7) du support (5), qui présente une porosité telle que lorsque la surface frontale (7) est mouillée, la solution réactive (19) peut être aspirée par capillarité dans le support (5).

3. Dispositif de détection colorimétrique selon les revendications 1 ou 2, caractérisé en ce qu'une partie de la paroi du compartiment de collecte de réactif (6) forme une entrée (18) à percer de part en part pour le passage de la solution réactive (19).

4. Dispositif de détection colorimétrique selon la revendication 3, caractérisé en ce que l'entrée est conçue sous la forme d'un septum (31) auto-étanche.

5. Dispositif de détection colorimétrique selon l'une des revendications 1 à 4, caractérisé en ce que l'ouverture de passage (21) pour la surface frontale (7) du support (5) est pratiquement sur le même plan que la paroi du compartiment de collecte de réactif (6).

6. Dispositif de détection colorimétrique selon les revendications 1 ou 2, caractérisé en ce que le réservoir (3) est logé dans le récipient de collecte (2) dans lequel le réservoir (3) repose sur un appendice (15) en forme de broche qui peut être enfoncé dans le réservoir (3) pour le détruire.

7. Dispositif de détection colorimétrique selon les revendications 1, 2 ou 5, caractérisé en ce que le récipient de collecte (2) peut être enfoncé de l'extérieur.

8. Dispositif de détection colorimétrique selon les revendications 1, 2 ou 5, caractérisé en ce que le réservoir est conçu à la manière d'une ampoule (3) pouvant être détruite, logée dans le récipient de collecte (2).

9. Dispositif de détection colorimétrique selon la revendication 6, caractérisé en ce que l'ampoule (3) est pourvue d'un capuchon (16) qui possède une butée de profondeur (a) jusqu'à laquelle elle peut être enfoncée dans le récipient de collecte (2) pour la destruction de l'ampoule (3).

10. Dispositif de détection colorimétrique selon la revendication 9, caractérisé en ce que le capuchon (16) est pourvu d'une ouverture d'aération (20) pouvant être fermée.

11. Dispositif de détection colorimétrique selon l'une des revendications 1 à 10, caractérisé en ce que le support (5) dans le boîtier (1) est recouvert d'une feuille de protection (26) de sa surface de détection (10) à exposer ouverte à la quantité en étude, et indiquant la coloration.

12. Dispositif de détection colorimétrique selon l'une des revendications 8 à 11, caractérisé en ce que la feuille de protection (26) s'étend sur une ouverture d'aération (20) dans la partie de boîtier logeant le réservoir (3).

13. Dispositif de détection colorimétrique selon l'une des revendications 1 à 12, caractérisé en ce que le support (5) est imprégné dans une zone de substance (8), tournée vers le compartiment de collecte de réactif (6), se raccordant à la surface frontale (7), de constituants de réaction nécessaires à la réaction de coloration, qui peuvent être transportés par mouillage avec la solution réactive (19), sous l'effet des forces de capillarité dans le support (5), vers la surface de détection (10) du support (5), à exposer à la quantité en étude, dans une zone de détection (11), dans laquelle se trouve une substance à détecter donnant une réaction de coloration avec les constituants de réaction et la solution réactive (19), en coopération avec la quantité en étude.

14. Dispositif de détection colorimétrique selon la revendication 13, caractérisé en ce que la substance de détection est un enzyme lié au support (5) dans la zone de détection (11), les constituants de réaction pour la réaction enzymatique sont absorbés avec des substances nécessaires à la quantité en étude, dans la zone de substance (8), et en ce que la solution réactive (19) est un réactif chromogène en solution aqueuse, déclenchant la réaction colorée.

15. Dispositif de détection colorimétrique selon la revendication 13, caractérisé en ce que la substance de détection est un enzyme existant lié au support (5) dans la zone de détection (11), les constituants de réaction dans la zone de substance (8) sont une imprégnation de co-substrats et de chromogènes, et la solution réactive (19) est une solution tampon aqueuse.

16. Dispositif de détection colorimétrique selon l'une des revendications 1 à 15, caractérisé en ce que le compartiment de collecte de réactif (6) est pourvu d'un garnissage (36) spongieux.
